# EUROPEAN PATENT SPECIFICATION

(11) **EP 3 459 765 B1**
(45) Date of publication and mention of the grant of the patent: **05.01.2022**
(21) Application number: 18194473.7
(22) Date of filing: 14.09.2018
(51) Int. Cl.: B60C 11/03, B60C 11/13, B60C 11/04

(54) **A TREAD FOR A TIRE**
LAUFFLÄCHE FÜR EINEN REIFEN
BANDE DE ROULEMENT D'UN PNEU

(30) Priority: 22.09.2017 US 201715712174
(43) Date of publication of application: 27.03.2019
(73) Proprietor: The Goodyear Tire & Rubber Company, Akron, OH 44316 (US)
(72) Inventor: VAISSAUD, Julien Alexandre, B-6700 Arlon (BE); KINDT, Peter André, B-6700 Arlon (BE); OSSIPOV, Alexander, B-3000 Leuven (BE)
(74) Representative: Kutsch, Bernd

(56) References cited:
- JP-A- H02 189 204
- JP-A- 2000 177 323
- US-A- 2 197 662
- US-A- 2 260 193
- US-A1- 2014 116 588

## Description

### Field of Invention

The present invention relates to a pneumatic tire with an improved tread, and more particularly, relates to a pneumatic tire tread having improved acoustic characteristics.

### Background of the Invention

Conventionally, in addition to circumferential main grooves and lateral grooves, pneumatic tire treads often have sipes on a tread surface in order to demonstrate favorable functional characteristics (e.g., low rolling resistance, good traction, good durability, etc.).

JP02189204 discloses a tire with a reduced noise generation, wherein partition parts are provided in groove which have defined widths in relation to the width of the groove.

US 2,260,193 discloses a tire comprising serpentine load support ribs comprising additional reinforcing ribs of less height than the load support ribs in adjacent grooves.

US 2,197,662 discloses in an embodiment a tire having double ribs and in grooves between each pair of double ribs a fin 16 which helps to avoid stone getting stuck in the grooves between the pairs of ribs.

JP2000177323 discloses a tire intended to improve wear resistance and in particular uneven wear resistance. For that purpose some ribs have slightly different radial height and special widths compared to neighboring ribs.

US 2014/0116588 provides a special tread pattern for avoiding cracks in groove bottoms. This is amongst others achieved by specific radii of the tread rubber at the groove bottom corners and a defined heights of adjacent ribs.

### Definitions

The following definitions are controlling for the disclosed invention.

"Axial" and "Axially" means the lines or directions that are parallel to the axis of rotation of the tire.

"Circumferential" means circular lines or directions extending along the perimeter of the surface of the annular tread perpendicular to the axial direction; it can also refer to the direction of the sets of adjacent circular curves whose radii define the axial curvature of the tread, as viewed in cross section.

"dBA" means A-weighted decibels, abbreviated dBA, or dBa, or dB(a), which are an expression of the relative loudness of sounds in air as perceived by the human ear. In the A-weighted system, the decibel of sounds at low frequencies are reduced, compared with unweighted decibels, in which no correction is made for audio frequency. This correction is made because the human ear is less sensitive at low audio frequencies, especially below 1000 hertz, than at high audio frequencies.

"Directional Tread Pattern" means a tread pattern designed for specific direction of rotation.

"Equatorial Plane" means the plane perpendicular to the tire's axis of rotation and passing through the center of its tread; or the plane containing the circumferential centerline of the tread.

"Groove" means an elongated void area in a tread that may extend circumferentially or laterally in the tread in a straight, curved or zigzag manner. It is understood that all groove widths are measured perpendicular to the centerline of the groove.

"Hertz" means number of cycles per second.

"Lateral" means a direction going from one sidewall of the tire towards the other sidewall of the tire.

"Net to gross" means the ratio of the net ground contacting tread surface to the gross area of the tread including the ground contacting tread surface and void spaces comprising grooves, notches and sipes.

"Notch" means a void area of limited length that may be used to modify the variation of net to gross void area at the edges of blocks.

"Radial" and "radially" mean directions radially toward or away from the axis of rotation of the tire.

"Sipe" means a groove having a width in the range of 0.2% to 0.8% of the axial tread width. Sipes are typically formed by steel blades having a 0.4 to 1.6 mm, inserted into a cast or machined mold.

"Tangential" and "Tangentially" refer to segments of circular curves that intersect at a point through which can be drawn a single line that is mutually tangential to both circular segments.

"Tread" means the ground contacting portion of a tire.

"Tread width" (TW) means the greatest axial distance across the tread, when measured (using a footprint of a tire,) laterally from shoulder to shoulder edge, when mounted on the design rim and subjected to a specified load and when inflated to a specified inflation pressure for said load.

"Void Space" means areas of the tread surface comprising grooves, notches and sipes.

### Summary of the Invention

The invention relates to a tread in accordance with claim 1 and to a tire in accordance with claim 10.

Dependent claims refer to preferred embodiments of the invention.

According to another preferred aspect of the tread, the radial height of the first groove rib is one-half the radial height of the first circumferential groove.

According to still another preferred aspect of the tread, a fourth circumferential groove extends in a circumferential direction entirely encircling the tire, the fourth circumferential groove having two sidewalls extending radially outward from an annular base, each sidewall defining a plane perpendicular to a rotational axis of the tire; and a fourth groove rib projects radially outward from the annular base of the fourth circumferential groove, the fourth groove rib extending circumferentially and entirely encircling the tire, the fourth groove rib having two sidewalls extending radially outward from the annular base of the fourth circumferential groove to a radially outermost annular surface of the fourth groove rib, each sidewall of the fourth groove rib defining a plane perpendicular to a rotational axis of the tire, the sidewalls of the fourth circumferential groove extending circumferentially and parallel to the sidewalls of the fourth groove rib, the fourth groove rib having a radial height less than a radial height of the fourth circumferential groove.

According to yet another preferred aspect of the tread, the sidewalls of each of the first, second, third, and fourth groove ribs are parallel to each other.

According to still another preferred aspect of the tread, the sidewalls of each of the first, second, third, and fourth circumferential grooves are parallel to the sidewalls of the first groove rib.

According to yet another preferred aspect of the tread, each of the sidewalls of the first circumferential groove is parallel to each of the sidewalls of the second groove rib.

According to still another preferred aspect of the tread, each of the sidewalls of the second circumferential groove is parallel to each of the sidewalls of the third groove rib.

According to yet another preferred aspect of the tread, each of the sidewalls of the third circumferential groove is parallel to each of the sidewalls of the fourth groove rib.

### Brief Description of the Drawings

The present invention will be more clearly understood by the following description of some examples thereof, with reference to the accompanying drawings, in which:
FIG. 1 is a schematic orthogonal front view of a pneumatic tire having a tread in accordance with the present invention.
FIG. 2 is a schematic sectional view taken along line 2-2 in FIG. 1.
FIG. 3 is a schematic graph demonstrating decreasing noise with the ribs in accordance with the present invention.
FIG. 4 is another schematic graph demonstrating decreasing noise with the ribs in accordance with the present invention.

### Description of Example Embodiments of the Present Invention

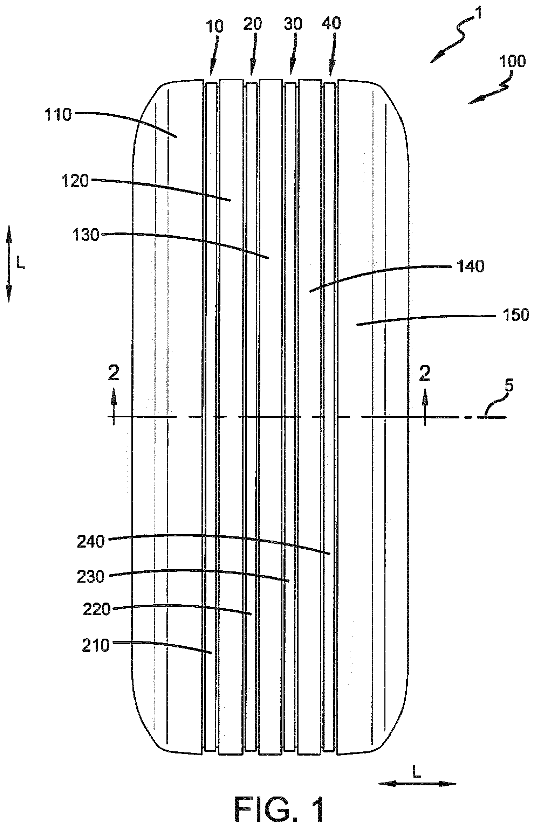

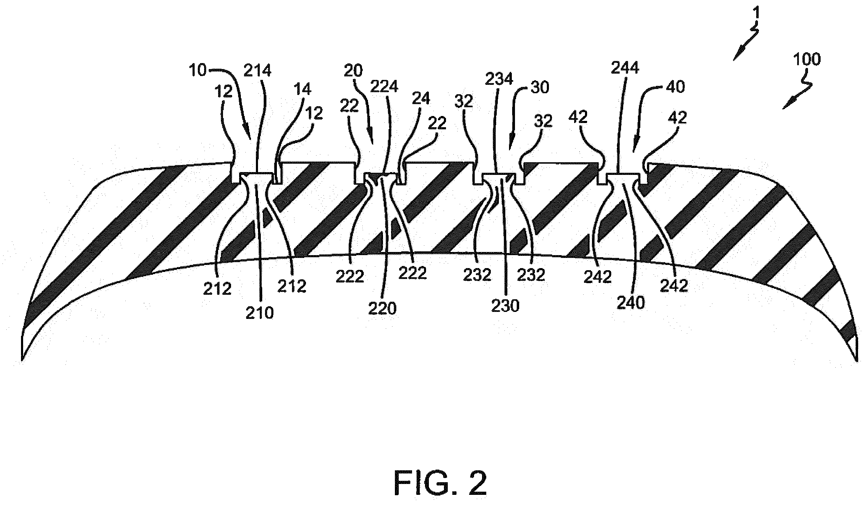

As shown in FIGS. 1-3, a pneumatic tire 1 in accordance with an embodiment of the present invention includes a tread 100 with a first main circumferential groove 10, a second main circumferential groove 20, a third main circumferential groove 30, and a fourth main circumferential groove 40 all extending in a circumferential direction C of the pneumatic tire forming the tread 100. Five land portions, or ribs 110, 120, 130, 140, 150 are formed by these main circumferential grooves 10, 20, 30, 40.

The main circumferential grooves 10, 20, 30, 40 preferably have a lateral width in a range of from 3.0 mm to 20.0 mm, more preferably 3mm to 10 mm, and preferably have a radial depth in a range of from 5.0 mm to 13.0 mm.

In accordance with the present invention, the first circumferential groove 10 has two sidewalls 12 extending radially outward from an annular base 14. Each sidewall 12 thereby defines a plane perpendicular to a rotational axis 5 of the tire 1. Projecting radially outward from the base 14 of the groove 10 is a rectangular groove rib 210. The groove rib 210 has two sidewalls 212 extending radially outward from the base 14 to a radially outermost annular surface 214 of the groove rib. Each sidewall 212 thereby defines a plane perpendicular to a rotational axis 5 of the tire 1. The sidewalls 12 of the first circumferential groove 10 extend circumferentially and parallel to the sidewalls 212 of the groove rib 210. The sidewalls 212 of the groove rib 210 preferably have a radial height above the base 14 of about one-half a radial height of the sidewalls 12 of the first circumferential groove 10. Alternatively, the sidewalls 212 of the groove rib 210 preferably have a maximum radial height of from 2.5 mm to 4.0 mm. The radially outermost annular surface 214 of the first groove rib 210 forms a cylinder concentric with a cylinder formed by the annular base 14 of the first circumferential groove 10.

In accordance with the present invention, the second circumferential groove 20 has two sidewalls 22 extending radially outward from an annular base 24. Each sidewall 22 thereby defines a plane perpendicular to a rotational axis 5 of the tire 1. Projecting radially outward from the base 24 of the groove 20 is a rectangular groove rib 220. The groove rib 220 has two sidewalls 222 extending radially outward from the base 24 to a radially outermost annular surface 224 of the groove rib. Each sidewall 222 thereby defines a plane perpendicular to a rotational axis 5 of the tire 1. The sidewalls 22 of the second circumferential groove 20 extend circumferentially and parallel to the sidewalls 212, 222 of the groove ribs 210, 220. The sidewalls 222 of the groove rib 220 preferably have a radial height above the base 24 of about one-half a radial height of the sidewalls 22 of the second circumferential groove 20. Alternatively, the sidewalls 222 of the groove rib 220 may have a maximum radial height of from 2.5 mm to 4.0 mm. The radially outermost annular surface 224 of the second groove rib 220 forms a cylinder concentric with the cylinders formed by the annular bases 14, 24 of the first and second circumferential groove 10, 20.

In accordance with the present invention, the third circumferential groove 30 has two sidewalls 32 extending radially outward from an annular base 34. Each sidewall 32 thereby defines a plane perpendicular to a rotational axis 5 of the tire 1. Projecting radially outward from the base 34 of the groove 30 is a rectangular groove rib 230. The groove rib 230 has two sidewalls 232 extending radially outward from the base 34 to a radially outermost annular surface 234 of the groove rib. Each sidewall 232 thereby define a plane perpendicular to a rotational axis 5 of the tire 1. The sidewalls 32 of the third circumferential groove 30 extend circumferentially and parallel to the sidewalls 212, 222, 232 of the groove ribs 210, 220, 230. The sidewalls 232 of the groove rib 230 preferably have a radial height above the base 34 of about one-half a radial height of the sidewalls 32 of the third circumferential groove 30. Alternatively, the sidewalls 232 of the groove rib 230 may have a maximum radial height in a range of from 2.5 mm to 4.0 mm. The radially outermost annular surface 234 of the third groove rib 230 forms a cylinder concentric with the cylinders formed by the annular bases 14, 24, 34 of the first, second, and third circumferential grooves 10, 20, 30.

In accordance with an embodiment of the present invention, the fourth circumferential groove 40 have two sidewalls 42 extending radially outward from an annular base 44. Each sidewall 42 thereby defines a plane perpendicular to a rotational axis 5 of the tire 1. Projecting radially outward from the base 44 of the groove 40 is a rectangular groove rib 240. The groove rib 240 has two sidewalls 242 extending radially outward from the base 44 to a radially outermost annular surface 244 of the groove rib. Each sidewall 242 thereby defines a plane perpendicular to a rotational axis 5 of the tire 1. The sidewalls 42 of the fourth circumferential groove 40 extend circumferentially and parallel to the sidewalls 212, 222, 232, 242 of the groove ribs 210, 220, 230, 240. The sidewalls 242 of the groove rib 240 have a radial height above the base 44 of preferably about one-half a radial height of the sidewalls 42 of the fourth circumferential groove 40. Alternatively, the sidewalls 242 of the groove rib 240 may have a maximum radial height in a range of from 2.5 mm to 4.0 mm. The radially outermost annular surface 244 of the fourth groove rib 240 forms a cylinder concentric with the cylinders formed by the annular bases 14, 24, 34, 44 of the first, second, third, and fourth circumferential grooves 10, 20, 30, 40.

The groove ribs 210, 220, 230, 240 are disconnected from the sidewalls 12, 22, 32, 42 of the circumferential grooves 10, 20, 30, 40.

The tread and tire in accordance with the invention reduces exterior noise under operating conditions of the tread 100 and tire 1 while having minimal effect on other functional characteristics of the tread and tire, such as cornering, braking, rolling resistance, wear, etc.

Advantageously, the groove ribs 210, 220, 230, 240 in the circumferential grooves 10, 20, 30, 40 do not significantly alter the structural behavior of the tread 100 and tire 1, other than reduction of noise.

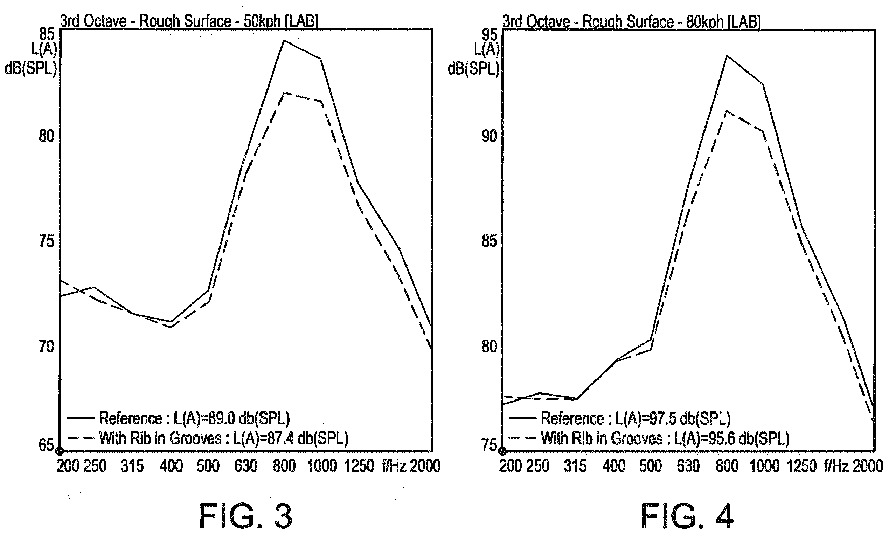

Fig. 3 and Fig. 4 show this noise reduction through almost the entire test frequency range when adding the groove ribs 210, 220, 230, 240 to a tread pattern, such as the tread 100.

Projecting radially outward from the base 44 of the groove 40 is a rectangular groove rib 240. The groove rib 240 has two sidewalls 242 extending radially outward from the base 44 to a radially outermost annular surface 244 of the groove rib. Each sidewall 242 thereby defines a plane perpendicular to a rotational axis 5 of the tire 1. The sidewalls 42 of the fourth circumferential groove 40 extend circumferentially and parallel to the sidewalls 212, 222, 232, 242 of the groove ribs 210, 220, 230, 240. The sidewalls 242 of the groove rib 240 have a radial height above the base 44 of preferably about one-half a radial height of the sidewalls 42 of the fourth circumferential groove 40. Alternatively, the sidewalls 242 of the groove rib 240 may have a maximum radial height in a range of from 2.5 mm to 4.0 mm. The radially outermost annular surface 244 of the fourth groove rib 240 forms a cylinder concentric with the cylinders formed by the annular bases 14, 24, 34, 44 of the first, second, third, and fourth circumferential grooves 10, 20, 30, 40.

The groove ribs 210, 220, 230, 240 are disconnected from the sidewalls 12, 22, 32, 42 of the circumferential grooves 10, 20, 30, 40.

The tread and tire in accordance with the invention reduces exterior noise under operating conditions of the tread 100 and tire 1 while having minimal effect on other functional characteristics of the tread and tire, such as cornering, braking, rolling resistance, wear, etc.

Advantageously, the groove ribs 210, 220, 230, 240 in the circumferential grooves 10, 20, 30, 40 do not significantly alter the structural behavior of the tread 100 and tire 1, other than reduction of noise.
Fig. 3 and Fig. 4 show this noise reduction through almost the entire test frequency range when adding the groove ribs 210, 220, 230, 240 to a tread pattern, such as the tread 100.

## Claims

1. A tread for a tire, the tread comprising:
a first circumferential groove (10) extending in a circumferential direction for entirely encircling the tire (1) when the tread (100) is mounted to a tire (1), the first circumferential groove (10) having two sidewalls (12) extending radially outward from an annular base (14), each sidewall (12) defining a plane perpendicular to a rotational axis of the tire (1) when the tread (100) is mounted to the tire (1);
a first groove rib (210) projecting radially outward from the annular base (14) of the first circumferential groove (10), the first groove rib (210) extending circumferentially and entirely encircling the tire (1) when the tread (100) is mounted to the tire (1), the first groove rib (210) having two sidewalls (212) extending radially outward from the annular base (14) of the first circumferential groove (10) to a radially outermost annular surface (214) of the first groove rib (210), each sidewall (212) of the first groove rib (210) defining a plane perpendicular to a rotational axis (5) of the tire (1) when the tread (100) is mounted to the tire (1), the sidewalls (212) of the first circumferential groove (10) extending circumferentially and parallel to the sidewalls (212) of the first groove rib (210), the first groove rib (210) having a radial height, as measured from the annular base (14), less than a radial height of the first circumferential groove (10);
a second circumferential groove (20) extending in a circumferential direction for entirely encircling the tire (1) when the tread (100) is mounted to a tire (1), the second circumferential groove (20) having two sidewalls (22) extending radially outward from an annular base (24), each sidewall (22) defining a plane perpendicular to a rotational axis of the tire (1) when the tread (100) is mounted to the tire (1);
a second groove rib (220) projecting radially outward from the annular base (24) of the second circumferential groove (20), the second groove rib (220) extending circumferentially and entirely encircling the tire (1) when the tread (100) is mounted to the tire (1), the second groove rib (220) having two sidewalls (222) extending radially outward from the annular base (24) of the second circumferential groove (20) to a radially outermost annular surface (224) of the second groove rib (220), each sidewall (222) of the second groove rib (220) defining a plane perpendicular to a rotational axis (5) of the tire (1) when the tread (100) is mounted to the tire (1), the sidewalls (222) of the second circumferential groove (20) extending circumferentially and parallel to the sidewalls (222) of the second groove rib (220), the second groove rib (220) having a radial height, as measured from the annular base (24), less than a radial height of the second circumferential groove (20);
a third circumferential groove (30) extending in a circumferential direction for entirely encircling the tire (1) when the tread (100) is mounted to a tire (1), the third circumferential groove (30) having two sidewalls (32) extending radially outward from an annular base, each sidewall (32) defining a plane perpendicular to a rotational axis of the tire (1) when the tread (100) is mounted to the tire (1); and
a third groove rib (230) projecting radially outward from the annular base of the third circumferential groove (30), the third groove rib (230) extending circumferentially and entirely encircling the tire (1) when the tread (100) is mounted to the tire (1), the third groove rib (230) having two sidewalls (232) extending radially outward from the annular base of the third circumferential groove (30) to a radially outermost annular surface (234) of the third groove rib (230), each sidewall (232) of the third groove rib (230) defining a plane perpendicular to a rotational axis (5) of the tire (1) when the tread (100) is mounted to the tire (1), the sidewalls (232) of the third circumferential groove (30) extending circumferentially and parallel to the sidewalls (232) of the third groove rib (230), the third groove rib (230) having a radial height, as measured from the annular base, less than a radial height of the third circumferential groove (30), **characterized in that**
the first, second and third circumferential grooves (10, 20, 30) extend in a straight manner, and
(i) the radial height of the first groove rib (210) is in a range of from 40 to 60 percent of the radial height of the first circumferential groove (10);
(ii) the radial height of the second groove rib (220) is in a range of from 40 to 60 percent of the radial height of the second circumferential groove (20); and
(iii) the radial height of the third groove rib (230) is in a range of from 40 to 60 percent of the radial height of the third circumferential groove (30).

2. The tread as set forth in claim 1, further comprising:
a fourth circumferential groove (40) extending in a circumferential direction for entirely encircling the tire (1) when the tread (100) is mounted to a tire (1), the fourth circumferential groove (40) having two sidewalls (42) extending radially outward from an annular base, each sidewall (42) defining a plane perpendicular to a rotational axis of the tire (1) when the tread (100) is mounted to the tire (1); and
a fourth groove rib (240) projecting radially outward from the annular base of the fourth circumferential groove (40), the fourth groove rib (240) extending circumferentially and entirely encircling the tire (1) when the tread (100) is mounted to the tire (1), the fourth groove rib (240) having two sidewalls (242) extending radially outward from the annular base of the fourth circumferential groove (40) to a radially outermost annular surface (244) of the fourth groove rib (240), each sidewall (242) of the fourth groove rib (240) defining a plane perpendicular to a rotational axis (5) of the tire (1) when the tread (100) is mounted to the tire (1), the sidewalls (242) of the fourth circumferential groove (40) extending circumferentially and parallel to the sidewalls (242) of the fourth groove rib (240), the fourth groove rib (240) having a radial height, as measured from the annular base, less than a radial height of the fourth circumferential groove (40), and
wherein the radial height of the fourth groove rib (240) is in a range of from 40 to 60 percent of the radial height of the fourth circumferential groove (40).

3. The tread as set forth in at least one of the previous claims wherein the sidewalls (212, 222, 232, 242) of at least two, at least three or each the first, second, third and fourth groove ribs (210, 220, 230, 240) are parallel to each other.

4. The tread as set forth in at least one of the previous claims wherein the sidewalls (12, 22, 32, 42) of at least one, at least two, at least three or each of the first, second, third and fourth circumferential grooves (20, 30, 40) are parallel to the sidewalls (12) of the first groove rib.

5. The tread as set forth in at least one of the previous claims wherein each of the sidewalls (12) of the first circumferential groove (10) is parallel to each of the sidewalls (222) of the second groove rib (210) and/or wherein each of the sidewalls (22) of the second circumferential groove (20) is parallel to each of the sidewalls (232) of the third groove rib (30) and/or wherein each of the sidewalls (32) of the third circumferential groove (30) is parallel to each of the sidewalls (242) of the fourth groove rib (240).

6. The tread as set forth in at least one of the previous claims wherein the tread is free of lateral grooves.

7. The tread as set forth in at least one of the previous claims wherein at least one, at least two, at least three or each of the annular bases (14, 24) of the first, second, third or fourth circumferential grooves (10, 20, 30, 40) respectively, and at least one, at least two, at least three or each of the radially outermost annular surface (214, 224, 234, 244) of the first, second, third or fourth groove ribs (210, 220, 230, 240) respectively extend in parallel to the axis of rotation (5) of the tire (1) when the tread (100) is mounted to the tire (1).

8. The tread as set forth in at least one of the previous claims wherein at least one, at least two, at least three or each of the first, second, third or fourth circumferential grooves (10, 20, 30, 40) extend in parallel to the equatorial plane of the tread (100) or of the tire (1) when the tread (100) is mounted to the tire (1).

9. The tread as set forth in at least one of the previous claims wherein at least one, at least two, at least three or each of the annular bases (14, 24) of the first, second, third or fourth circumferential grooves (10, 20, 30, 40) respectively, forms a cylinder concentric with a cylinder formed by the radially outermost annular surface (214, 224, 234, 244) of at least one, at least two, at least three or each of the first, second, third or fourth groove ribs (210, 220, 230, 240).

10. A tire, preferably a pneumatic tire, having a tread (100) in accordance with at least one of the previous claims.

## Patentansprüche

1. Lauffläche für einen Reifen, wobei die Lauffläche Folgendes umfasst:
eine erste zirkumferenzielle Rille (10), die sich in einer zirkumferenziellen Richtung zum vollständigen Umschließen des Reifens (1) erstreckt, wenn die Lauffläche (100) an einem Reifen (1) montiert ist, wobei die erste zirkumferenzielle Rille (10) zwei Seitenwände (12) aufweist, die sich von einer ringförmigen Basis (14) radial nach außen erstrecken, wobei jede Seitenwand (12) eine Ebene senkrecht zu einer Drehachse des Reifens (1) definiert, wenn die Lauffläche (100) an dem Reifen (1) montiert ist;
eine erste Rillenrippe (210), die von der ringförmigen Basis (14) der ersten zirkumferenziellen Rille (10) radial nach außen vorsteht, wobei sich die erste Rillenrippe (210) zirkumferenziell erstreckt und den Reifen (1) vollständig umgibt, wenn die Lauffläche (100) an dem Reifen (1) montiert ist, wobei die erste Rillenrippe (210) zwei Seitenwände (212) aufweist, die sich von der ringförmigen Basis (14) der ersten zirkumferenziellen Rille (10) zu einer radial äußersten ringförmigen Oberfläche (214) der ersten Rillenrippe (210) radial nach außen erstrecken, wobei jede Seitenwand (212) der ersten Rillenrippe (210) eine Ebene senkrecht zu einer Drehachse (5) des Reifens (1) definiert, wenn die Lauffläche (100) an dem Reifen (1) montiert ist, wobei sich die Seitenwände (212) der ersten zirkumferenziellen Rille (10) zirkumferenziell und parallel zu den Seitenwänden (212) der ersten Rillenrippe (210) erstrecken, wobei die erste Rillenrippe (210) eine radiale Höhe, wie von der ringförmigen Basis (14) gemessen, von weniger als einer radialen Höhe der ersten zirkumferenziellen Rille (10) aufweist;
eine zweite zirkumferenzielle Rille (20), die sich in einer zirkumferenziellen Richtung zum vollständigen Umschließen des Reifens (1) erstreckt, wenn die Lauffläche (100) an einem Reifen (1) montiert ist, wobei die zweite zirkumferenzielle Rille (20) zwei Seitenwände (22) aufweist, die sich von einer ringförmigen Basis (24) radial nach außen erstrecken, wobei jede Seitenwand (22) eine Ebene senkrecht zu einer Drehachse des Reifens (1) definiert, wenn die Lauffläche (100) an dem Reifen (1) montiert ist;
eine zweite Rillenrippe (220), die von der ringförmigen Basis (24) der zweiten zirkumferenziellen Rille (20) radial nach außen vorsteht, wobei sich die zweite Rillenrippe (220) zirkumferenziell erstreckt und den Reifen (1) vollständig umgibt, wenn die Lauffläche (100) an dem Reifen (1) montiert ist, wobei die zweite Rillenrippe (220) zwei Seitenwände (222) aufweist, die sich von der ringförmigen Basis (24) der zweiten zirkumferenziellen Rille (20) zu einer radial äußersten ringförmigen Oberfläche (224) der zweiten Rillenrippe (220) radial nach außen erstrecken, wobei jede Seitenwand (222) der zweiten Rillenrippe (220) eine Ebene senkrecht zu einer Drehachse (5) des Reifens (1) definiert, wenn die Lauffläche (100) an dem Reifen (1) montiert ist, wobei sich die Seitenwände (222) der zweiten zirkumferenziellen Rille (20) zirkumferenziell und parallel zu den Seitenwänden (222) der zweiten Rillenrippe (220) erstrecken, wobei die zweite Rillenrippe (220) eine radiale Höhe, wie von der ringförmigen Basis (24) gemessen, von weniger als einer radialen Höhe der zweiten zirkumferenziellen Rille (20) aufweist;
eine dritte zirkumferenzielle Rille (30), die sich in einer zirkumferenziellen Richtung zum vollständigen Umschließen des Reifens (1) erstreckt, wenn die Lauffläche (100) an einem Reifen (1) montiert ist, wobei die dritte zirkumferenzielle Rille (30) zwei Seitenwände (32) aufweist, die sich von einer ringförmigen Basis radial nach außen erstrecken, wobei jede Seitenwand (32) eine Ebene senkrecht zu einer Drehachse des Reifens (1) definiert, wenn die Lauffläche (100) an dem Reifen (1) montiert ist; und
eine dritte Rillenrippe (230), die von der ringförmigen Basis der dritten zirkumferenziellen Rille (30) radial nach außen vorsteht, wobei sich die dritte Rillenrippe (230) zirkumferenziell erstreckt und den Reifen (1) vollständig umgibt, wenn die Lauffläche (100) an dem Reifen (1) montiert ist, wobei die dritte Rillenrippe (230) zwei Seitenwände (232) aufweist, die sich von der ringförmigen Basis der dritten zirkumferenziellen Rille (30) zu einer radial äußersten ringförmigen Oberfläche (234) der dritten Rillenrippe (230) radial nach außen erstrecken, wobei jede Seitenwand (232) der dritten Rillenrippe (230) eine Ebene senkrecht zu einer Drehachse (5) des Reifens (1) definiert, wenn die Lauffläche (100) an dem Reifen (1) montiert ist, wobei sich die Seitenwände (232) der dritten zirkumferenziellen Rille (30) zirkumferenziell und parallel zu den Seitenwänden (232) der dritten Rillenrippe (230) erstrecken, wobei die dritte Rillenrippe (230) eine radiale Höhe, wie von der ringförmigen Basis gemessen, von weniger als einer radialen Höhe der dritten zirkumferenziellen Rille (30) aufweist, **dadurch gekennzeichnet, dass**
sich die erste, die zweite und die dritte zirkumferenzielle Rille (10, 20, 30) auf eine gerade Weise erstrecken und
(i) die radiale Höhe der ersten Rillenrippe (210) in einem Bereich von 40 bis 60 Prozent der radialen Höhe der ersten zirkumferenziellen Rille (10) liegt;
(ii) die radiale Höhe der zweiten Rillenrippe (220) in einem Bereich von 40 bis 60 Prozent der radialen Höhe der zweiten zirkumferenziellen Rille (20) liegt; und
(iii) die radiale Höhe der dritten Rillenrippe (230) in einem Bereich von 40 bis 60 Prozent der radialen Höhe der dritten zirkumferenziellen Rille (30) liegt.

2. Lauffläche nach Anspruch 1, die ferner Folgendes umfasst:
eine vierte zirkumferenzielle Rille (40), die sich in einer zirkumferenziellen Richtung zum vollständigen Umschließen des Reifens (1) erstreckt, wenn die Lauffläche (100) an einem Reifen (1) montiert ist, wobei die vierte zirkumferenzielle Rille (40) zwei Seitenwände (42) aufweist, die sich von einer ringförmigen Basis radial nach außen erstrecken, wobei jede Seitenwand (42) eine Ebene senkrecht zu einer Drehachse des Reifens (1) definiert, wenn die Lauffläche (100) an dem Reifen (1) montiert ist; und
eine vierte Rillenrippe (240), die von der ringförmigen Basis der vierten zirkumferenziellen Rille (40) radial nach außen vorsteht, wobei sich die vierte Rillenrippe (240) zirkumferenziell erstreckt und den Reifen (1) vollständig umgibt, wenn die Lauffläche (100) an dem Reifen (1) montiert ist, wobei die vierte Rillenrippe (240) zwei Seitenwände (242) aufweist, die sich von der ringförmigen Basis der vierten zirkumferenziellen Rille (40) zu einer radial äußersten ringförmigen Oberfläche (244) der vierten Rillenrippe (240) radial nach außen erstrecken, wobei jede Seitenwand (242) der vierten Rillenrippe (240) eine Ebene senkrecht zu einer Drehachse (5) des Reifens (1) definiert, wenn die Lauffläche (100) an dem Reifen (1) montiert ist, wobei sich die Seitenwände (242) der vierten zirkumferenziellen Rille (40) zirkumferenziell und parallel zu den Seitenwänden (242) der vierten Rillenrippe (240) erstrecken, wobei die vierte Rillenrippe (240) eine radiale Höhe, wie von der ringförmigen Basis gemessen, von weniger als einer radialen Höhe der vierten zirkumferenziellen Rille (40) aufweist, und
wobei die radiale Höhe der vierten Rillenrippe (240) in einem Bereich von 40 bis 60 Prozent der radialen Höhe der vierten zirkumferenziellen Rille (40) liegt.

3. Lauffläche nach wenigstens einem der vorhergehenden Ansprüche, wobei die Seitenwände (212, 222, 232, 242) von wenigstens zwei, wenigstens drei oder jeder der ersten, der zweiten, der dritten und der vierten Rillenrippe (210, 220, 230, 240) parallel zueinander sind.

4. Lauffläche nach wenigstens einem der vorhergehenden Ansprüche, wobei die Seitenwände (12, 22, 32, 42) von wenigstens einer, wenigstens zwei, wenigstens drei oder jeder der ersten, der zweiten, der dritten und der vierten zirkumferenziellen Rille (20, 30, 40) parallel zu den Seitenwänden (12) der ersten Rillenrippe sind.

5. Lauffläche nach wenigstens einem der vorhergehenden Ansprüche, wobei jede der Seitenwände (12) der ersten zirkumferenziellen Rille (10) parallel zu jeder der Seitenwände (222) der zweiten Rillenrippe (210) ist und/oder wobei jede der Seitenwände (22) der zweiten zirkumferenziellen Rille (20) parallel zu jeder der Seitenwände (232) der dritten Rillenrippe (30) ist und/oder wobei jede der Seitenwände (32) der dritten zirkumferenziellen Rille (30) parallel zu jeder der Seitenwände (242) der vierten Rillenrippe (240) ist.

6. Lauffläche nach wenigstens einem der vorhergehenden Ansprüche, wobei die Lauffläche frei von seitlichen Rillen ist.

7. Lauffläche nach wenigstens einem der vorhergehenden Ansprüche, wobei sich wenigstens eine, wenigstens zwei, wenigstens drei oder jede der ringförmigen Basen (14, 24) der ersten, der zweiten, der dritten beziehungsweise der vierten zirkumferenziellen Rille (10, 20, 30, 40) und wenigstens eine, wenigstens zwei, wenigstens drei oder jede der radial äußersten Ringoberfläche (214, 224, 234, 244) der ersten, der zweiten, der dritten beziehungsweise der vierten Rillenrippe (210, 220, 230, 240) parallel zu der Drehachse (5) des Reifens (1) erstrecken, wenn die Lauffläche (100) an dem Reifen (1) montiert ist.

8. Lauffläche nach wenigstens einem der vorhergehenden Ansprüche, wobei sich wenigstens eine, wenigstens zwei, wenigstens drei oder jede der ersten, der zweiten, der dritten oder der vierten zirkumferenziellen Rille (10, 20, 30, 40) parallel zu der äquatorialen Ebene der Lauffläche (100) oder des Reifens (1) erstrecken, wenn die Lauffläche (100) an dem Reifen (1) montiert ist.

9. Lauffläche nach wenigstens einem der vorhergehenden Ansprüche, wobei wenigstens eine, wenigstens zwei, wenigstens drei oder jede der ringförmigen Basen (14, 24) der ersten, der zweiten, der dritten beziehungsweise der vierten zirkumferenziellen Rille (10, 20, 30, 40) einen Zylinder ausbildet, der konzentrisch zu einem Zylinder ist, der durch die radial äußerste Ringoberfläche (214, 224, 234, 244) von wenigstens einer, wenigstens zwei, wenigstens drei oder jeder der ersten, der zweiten, der dritten oder der vierten Rillenrippe (210, 220, 230, 240) ausgebildet ist.

10. Reifen, vorzugsweise ein Luftreifen, der eine Lauffläche (100) nach wenigstens einem der vorhergehenden Ansprüche aufweist.

## Revendications

1. Bande de roulement destinée à un bandage, la bande de roulement comprenant :
une première rainure circonférentielle (10) qui s'étend dans une direction circonférentielle dans le but d'encercler entièrement le bandage (1) lorsque la bande de roulement (100) est montée sur un bandage (1), la première rainure circonférentielle (10) possédant deux parois latérales (12) qui s'étendent, dans la direction radiale, à l'extérieur d'une base annulaire (14), chaque paroi latérale (12) définissant un plan qui est perpendiculaire à un axe de rotation du bandage (1) lorsque la bande de roulement (100) est montée sur le bandage (1) ;
une première nervure de rainure (210) qui fait saillie, dans la direction radiale, à l'extérieur de la base annulaire (14) de la première rainure circonférentielle (10), la première nervure de rainure (210) s'étendant dans la direction circonférentielle et encerclant entièrement le bandage (1) lorsque la bande de roulement (100) est montée sur le bandage (1), la première nervure de rainure (210) possédant deux parois latérales (212) qui s'étendent, dans la direction radiale, à l'extérieur de la base annulaire (14) de la première rainure circonférentielle (10) en direction d'une surface annulaire (214) la plus externe, dans la direction radiale, de la première nervure de rainure (210), chaque paroi latérale (212) de la première nervure de rainure (210) définissant un plan qui est perpendiculaire à un axe de rotation (5) du bandage (1) lorsque la bande de roulement (100) est montée sur le bandage (1), les parois latérales (212) de la première rainure circonférentielle (10) s'étendant dans la direction circonférentielle et parallèlement aux parois latérales (212) de la première nervure de rainure (210), la première nervure de rainure (210) possédant une hauteur radiale, telle qu'on la mesure à partir de la base annulaire (14), qui est inférieure à une hauteur radiale de la première rainure circonférentielle (10) ;
une deuxième rainure circonférentielle (20) qui s'étend dans une direction circonférentielle dans le but d'encercler entièrement le bandage (1) lorsque la bande de roulement (100) est montée sur un bandage (1), la deuxième rainure circonférentielle (20) possédant deux parois latérales (22) qui s'étendent, dans la direction radiale, à l'extérieur d'une base annulaire (24), chaque paroi latérale (22) définissant un plan qui est perpendiculaire à un axe de rotation du bandage (1) lorsque la bande de roulement (100) est montée sur le bandage (1) ;
une deuxième nervure de rainure (220) qui fait saillie, dans la direction radiale, à l'extérieur de la base annulaire (24) de la deuxième rainure circonférentielle (20), la deuxième nervure de rainure (220) s'étendant dans la direction circonférentielle et encerclant entièrement le bandage (1) lorsque la bande de roulement (100) est montée sur le bandage (1), la deuxième nervure de rainure (220) possédant deux parois latérales (222) qui s'étendent, dans la direction radiale, à l'extérieur de la base annulaire (24) de la deuxième rainure circonférentielle (20) en direction d'une surface annulaire (224) la plus externe, dans la direction radiale, de la deuxième nervure de rainure (220), chaque paroi latérale (222) de la deuxième nervure de rainure (220) définissant un plan qui est perpendiculaire à un axe de rotation (5) du bandage (1) lorsque la bande de roulement (100) est montée sur le bandage (1), les parois latérales (222) de la deuxième rainure circonférentielle (20) s'étendant dans la direction circonférentielle et parallèlement aux parois latérales (222) de la deuxième nervure de rainure (220), la deuxième nervure de rainure (220) possédant une hauteur radiale, telle qu'on la mesure à partir de la base annulaire (24), qui est inférieure à une hauteur radiale de la deuxième rainure circonférentielle (20) ;
une troisième rainure circonférentielle (30) qui s'étend dans une direction circonférentielle dans le but d'encercler entièrement le bandage (1) lorsque la bande de roulement (100) est montée sur un bandage (1), la troisième rainure circonférentielle (30) possédant deux parois latérales (32) qui s'étendent, dans la direction radiale, à l'extérieur d'une base annulaire, chaque paroi latérale (32) définissant un plan qui est perpendiculaire à un axe de rotation du bandage (1) lorsque la bande de roulement (100) est montée sur le bandage (1) ; et
une troisième nervure de rainure (230) qui fait saillie, dans la direction radiale, à l'extérieur de la base annulaire de la troisième rainure circonférentielle (30), la troisième nervure de rainure (230) s'étendant dans la direction circonférentielle et encerclant entièrement le bandage (1) lorsque la bande de roulement (100) est montée sur le bandage (1), la troisième nervure de rainure (230) possédant deux parois latérales (232) qui s'étendent, dans la direction radiale, à l'extérieur de la base annulaire de la troisième rainure circonférentielle (30) en direction d'une surface annulaire (234) la plus externe, dans la direction radiale, de la troisième nervure de rainure (230), chaque paroi latérale (232) de la troisième nervure de rainure (230) définissant un plan qui est perpendiculaire à un axe de rotation (5) du bandage (1) lorsque la bande de roulement (100) est montée sur le bandage (1), les parois latérales (232) de la troisième rainure circonférentielle (30) s'étendant dans la direction circonférentielle et parallèlement aux parois latérales (232) de la troisième nervure de rainure (230), la troisième nervure de rainure (230) possédant une hauteur radiale, telle qu'on la mesure à partir de la base annulaire, qui est inférieure à une hauteur radiale de la troisième rainure circonférentielle (30) ; **caractérisée en ce que** :
la première, la deuxième et la troisième rainure circonférentielle (10, 20, 30) s'étendent dans une direction rectiligne ; et
(i) la hauteur radiale de la première nervure de rainure (210) se situe dans une plage qui représente de 40 à 60 % de la hauteur radiale de la première rainure circonférentielle (10) ;
(ii) la hauteur radiale de la deuxième nervure de rainure (220) se situe dans une plage qui représente de 40 à 60 % de la hauteur radiale de la deuxième rainure circonférentielle (20) ; et
(iii) la hauteur radiale de la troisième nervure de rainure (230) se situe dans une plage qui représente de 40 à 60 % de la hauteur radiale de la troisième rainure circonférentielle (30).

2. Bande de roulement telle qu'elle est indiquée dans la revendication 1, qui comprend en outre :
une quatrième rainure circonférentielle (40) qui s'étend dans une direction circonférentielle dans le but d'encercler entièrement le bandage (1) lorsque la bande de roulement (100) est montée sur un bandage (1), la quatrième rainure circonférentielle (40) possédant deux parois latérales (42) qui s'étendent, dans la direction radiale, à l'extérieur d'une base annulaire, chaque paroi latérale (42) définissant un plan qui est perpendiculaire à un axe de rotation du bandage (1) lorsque la bande de roulement (100) est montée sur le bandage (1) ; et
une quatrième nervure de rainure (240) qui fait saillie, dans la direction radiale, à l'extérieur de la base annulaire de la quatrième rainure circonférentielle (40), la quatrième nervure de rainure (240) s'étendant dans la direction circonférentielle et encerclant entièrement le bandage (1) lorsque la bande de roulement (100) est montée sur le bandage (1), la quatrième nervure de rainure (240) possédant deux parois latérales (242) qui s'étendent, dans la direction radiale, à l'extérieur de la base annulaire de la quatrième rainure circonférentielle (40) en direction d'une surface annulaire (244) la plus externe, dans la direction radiale, de la quatrième nervure de rainure (240), chaque paroi latérale (242) de la quatrième nervure de rainure (240) définissant un plan qui est perpendiculaire à un axe de rotation (5) du bandage (1) lorsque la bande de roulement (100) est montée sur le bandage (1), les parois latérales (242) de la quatrième rainure circonférentielle (40) s'étendant dans la direction circonférentielle et parallèlement aux parois latérales (242) de la quatrième nervure de rainure (240), la quatrième nervure de rainure (240) possédant une hauteur radiale, telle qu'on la mesure à partir de la base annulaire, qui est inférieure à une hauteur radiale de la quatrième rainure circonférentielle (40) ; et
dans laquelle la hauteur radiale de la quatrième nervure de rainure (240) se situe dans une plage qui représente de 40 à 60 % de la hauteur radiale de la quatrième rainure circonférentielle (40).

3. Bande de roulement telle qu'elle est indiquée dans au moins une des revendications précédentes, dans laquelle les parois latérales (212, 222, 232, 242) d'au moins deux, d'au moins trois ou de chaque nervure de rainure choisie parmi la première, la deuxième, la troisième et la quatrième nervure de rainure (210, 220, 230, 240) sont parallèles les unes aux autres.

4. Bande de roulement telle qu'elle est indiquée dans au moins une des revendications précédentes, dans laquelle les parois latérales (12, 22, 32, 42) d'au moins deux, d'au moins trois ou de chaque nervure de rainure choisie parmi la première, la deuxième, la troisième et la quatrième rainure circonférentielle (20, 30, 40) sont parallèles aux parois latérales (12) de la première nervure de rainure.

5. Bande de roulement telle qu'elle est indiquée dans au moins une des revendications précédentes, dans laquelle chacune des parois latérales (12) de la première rainure circonférentielle (10) est parallèle à chacune des parois latérales (222) de la deuxième nervure de rainure (210) et/ou dans laquelle chacune des parois latérales (22) de la deuxième rainure circonférentielle (20) est parallèle à chacune des parois latérales (232) de la troisième nervure de rainure (30) et/ou dans laquelle chacune des parois latérales (32) de la troisième rainure circonférentielle (30) est parallèle à chacune des parois latérales (232) de la quatrième nervure de rainure (240).

6. Bande de roulement telle qu'elle est indiquée dans au moins une des revendications précédentes, dans laquelle la bande de roulement est exempte de rainures latérales.

7. Bande de roulement telle qu'elle est indiquée dans au moins une des revendications précédentes, dans laquelle au moins une, au moins deux, au moins trois ou chacune des bases annulaires (14, 24) de la première, de la deuxième, de la troisième ou de la quatrième rainure circonférentielle (10, 20, 30, 40) respectivement, et au moins une, au moins deux, au moins trois ou chacune des surfaces annulaires les plus externes (214, 224, 234, 244) de la première, de la deuxième, de la troisième ou de la quatrième nervure de rainure (210, 220, 230, 240) respectivement s'étend/s'étendent parallèlement à l'axe de rotation (5) du bandage (1) lorsque la bande de roulement (100) est montée sur le bandage (1).

8. Bande de roulement telle qu'elle est indiquée dans au moins une des revendications précédentes, dans laquelle au moins une, au moins deux, au moins trois ou chaque nervure de rainure choisie parmi la première, la deuxième, la troisième et la quatrième rainure circonférentielle (10, 20, 30, 40) s'étend/s'étendent parallèlement au plan équatorial de la bande de roulement (100) ou du bandage (1) lorsque la bande de roulement (100) est montée sur le bandage (1).

9. Bande de roulement telle qu'elle est indiquée dans au moins une des revendications précédentes, dans laquelle au moins une, au moins deux, au moins trois ou chacune des bases annulaires (14, 24) de la première, de la deuxième, de la troisième ou de la quatrième rainure circonférentielle (10, 20, 30, 40) respectivement, forme(nt) un cylindre qui est concentrique à un cylindre formé par la surface annulaire les plus externe dans la direction radiale (214, 224, 234, 244) d'au moins une, au moins deux, d'au moins trois ou de chaque nervure de rainure choisie parmi la première, la deuxième, la troisième et la quatrième nervure de rainure (210, 220, 230, 240).

10. Bandage, de préférence bandage pneumatique, qui possède une bande de roulement (100) en conformité avec au moins une des revendications précédentes.
